# FASCICULE DE BREVET EUROPEEN

(11) **EP 2 176 192 B1**
(45) Date de publication et mention de la délivrance du brevet: **12.10.2011**
(21) Numéro de dépôt: 08774689.7
(22) Date de dépôt: 03.07.2008
(51) Int. Cl.: C04B 35/66, F27D 1/16

(54) **MELANGE SEC POUR LE TRAITEMENT DE SUBSTRATS REFRACTAIRES ET PROCEDE LE METTANT EN OEUVRE**
TROCKENMISCHUNG ZUR BEHANDLUNG VON FEUERFESTEN SUBSTRATEN UND VERFAHREN ZU IHRER VERWENDUNG
DRY MIX FOR TREATING REFRACTORY SUBSTRATES AND PROCESS USING SAME

(30) Priorité: 05.07.2007 BE 200700336
(43) Date de publication de la demande: 21.04.2010
(73) Titulaire: FIB-SERVICES INTELLECTUAL S.A., 1724 Luxembourg (LU)
(72) Inventeur: DI LORETO, Osvaldo, B-7300 Boussu (BE)
(74) Mandataire: Claeys, Pierre
(86) Numéro de dépôt international: PCT/EP2008/058563
(87) Numéro de publication internationale: WO 2009/004052

(56) Documents cités:
- GB-A- 2 233 323

## Description

La présente invention est relative à un mélange sec de traitement de substrats réfractaires, comprenant :
- des particules combustibles d'au moins une substance oxydable qui, en présence d'oxygène, donne lieu à une réaction exothermique, et
- des particules d'au moins une autre substance,
   ces particules formant ensemble, au cours de ladite réaction exothermique, une masse cohérente capable d'adhérer et/ou d'interagir avec le substrat traité,
   ce mélange comprenant, comme particules d'au moins une autre substance, des particules d'au moins une substance d'expansion, le mélange sec, sans les particules de cette au moins une substance d'expansion présentant une première densité apparente et le mélange sec contenant ladite au moins une substance d'expansion présentant une seconde densité apparente inférieure à ladite première densité apparente,
   ainsi qu'au procédé mettant en oeuvre un tel mélange.

Les parois réfractaires, qui garnissent certaines installations de production, subissent en service des dégradations par érosion, corrosion, choc thermique, etc, ce qui rend leur surface rugueuse, poreuse ou parsemée de défauts (écaillage, fissuration, cavités,...). Cela peut avoir diverges conséquences sur le fonctionnement des installations de production : frein à la circulation des produits solides, croûtage, fuite de liquides ou de gaz, pénétration d'agents corrodants; en particulier, en fours à coke, les parois en réfractaires de silice des chambres de carbonisation se garnissent de carbone, qui au fit du temps se transforme en graphite avec gonflement; régulièrement, il faut procéder à son élimination pour éviter une surcharge de puissance au déchargement du coke. De même, la zone d'enfournement des charbons est aussi sujette à de tels dépôts de carbone, ce qui nécessite leur enlèvement manuel à intervalles réguliers. Par ailleurs, les fissures passantes entre la chambre de carbonisation et les carneaux de chauffe offrent un passage aux matières organiques vers la cheminée, avec les conséquences écologiques que l'on devine.

Ces différents défauts et endommagements ont donné lieu au développement de plusieurs modes de réparation ou de traitement de substrats réfractaires.

On peut citer par exemple la demande de brevet FR-A-2202053 qui décrit un procédé de projection sur une paroi endommagée, à température élevée, d'une suspension aqueuse contenant en majorité une matière granuleuse réfractaire de même nature que la paroi (silice), un liant (type carbonate ou borate de métal alcalin), un épaississant colloïdal (bentonite) et un composant abaissant le point de fusion (silicate de sodium).

On connaît également, par la demande de brevet WO 2004/085341, une application sur un substrat, par gunitage (dry gunning), d'un mélange contenant en majorité des grains de silice vitreuse, un granulat alumineux, une argile et un liant chimique.

Dans la demande de brevet FR-A-2524462, on décrit un procédé de projection à la flamme (flame spraying) d'un mélange constitué en grande majorité de particules de silice, d'oxyde de calcium et d'un ajout d'oxyde de lithium.

On peut aussi citer la famille des brevets relatifs à la soudure céramique (ceramic welding), qui consiste en la projection, sur une paroi à haute température et dans un courant d'oxygène, d'un mélange comprenant en majorité des grains réfractaires (silice, alumine, zircone,...) et des particules oxydables (Si + Al), qui par réaction exothermique (combustion) forment une masse réfractaire cohérente sur la paroi à réparer (voir entre autres FR-A-2066355, FR-A-2516915 et BE-1005914).

Ces quatre procédés permettent l'application sur le substrat réfractaire à traiter ou à réparer d'une masse ou couche réfractaire épaisse et cohérente qui adhère à la surface du substrat et/ou interagit avec celui-ci. Ces procédés font tous appel pour la composition du mélange à une matière réfractaire granuleuse, liée par des composants fusibles ou fondus à l'aide d'une flamme.

On connaît également un procédé de soudure céramique permettant la formation d'une masse réfractaire poreuse, le mélange à projeter contenant, en plus de particules réfractaires et de particules combustibles, des particules d'une matière capable de donner lieu à la formation d'une porosité à l'intérieur de la masse réfractaire formée par la projection (voir GB-A-2233323):

Lors de l'opération de réparation par projection réactivé, la qualité du revêtement obtenu sur la paroi généralement réfractaire, dépend de plusieurs paramètres dont notamment la température du support, la vitesse de projection et le débit massique du mélange.

Dans ce type de procédés, et en particulier dans le cals de la soudure céramique, le gaz porteur est un gaz réactif avec au moins un des éléments de la matière pulvérulente. Au contact de la paroi chaude, le mélange réagit spontanément et une série de réactions chimiques conduit à la formation d'un matériau réfractaire adhérent, dont les caractéristiques sont compatibles avec celles du support traité.

La vitesse de projection est donc un élément prépondérant. En effet, si elle est trop importante, la quantité de matière peut ne pas réagir (car ne participant pas à la réaction exothermique) et rebondir exagérément sur la paroi au détriment de la qualité du magma en formation engendré par la projection.

La présente invention a pour but de mettre au point un mélange sec de traitement de substrats réfractaires et un procédé pour sa mise en oeuvre qui permettant l'obtention d'une vitesse de projection ralentie et contrôlée, en évitant la possibilité de retour de flamme, de façon à réaliser un traitement de surface approprié, et cela à l'aide d'une composition simple et efficace.

Pour résoudre ce problème on a prévu suivant l'invention un mélange sec tel qu'indiqué au début, qui comprend en outre, à titre de particules d'au moins une autre substance, des particules d'au moins un verre siliceux, comme partie majoritaire en poids du mélange.

Par son volume spécifique important (densité des grains de préférence inférieure à 2, avantageusement à 1,5 en particulier à 1), la substance d'expansion confère au mélange à projeter une densité apparente plus faible, ce qui contribue à ralentir le débit massique projeté, et ainsi à diminuer l'épaisseur de la couche déposée (de l'ordre du millimètre) à la surface du réfractaire à chaque passage du jet de projection. L'application peut se faire en un seul passage (traitement de surface) ou en , plusieurs passagers (comblement d'une fissure ou d'une cavité).

Ladite au moins une substance d'expansion peut être choisie parmi de la petite expansée, de la vermiculite expansée, de la poudre de bois ou de coke, et leurs mélanges.

On utilise de préférence la perlite expansée. La perlite est un verre siliceux granuleux d'origine volcanique que l'on peut expanser thermiquement, en vue d'obtenir des particules de perlite expansée. De préférence, la taille des particules de perlite expansée est inférieure ou égale à 1 mm.

D'une manière inattendue, on a aussi constaté que la présence de perlite expansée dans le mélange améliore la stabilité de celui-ci (pas de ségrégation suite à des vibrations). En effet, on a pu constater que, au cours du stockage ou du transport du mélange, pendant lesquels celui-ci peut-être soumis à des secousses ou des vibrations, le mélange ne montre pas de phénomène de ségrégation vers le bas des particules combustibles du mélange, ce qui est le cas en l'absence de particules de perlite expansée.

Comme substances oxydables, on peut envisager de fines particules d'un ou de plusieurs métaux ou métalloïdes capables de brûler en présence d'oxygène, en particulier à la température normale de fonctionnement du four à réparer. On peut citer, de préférence, des particules de silicium, d'aluminium, de zirconium, de magnésium, de calcium ou encore de fer, de chrome, de titane, ou de leurs mélanges ou alliages. De préférence, la taille des particules combustibles est inférieure ou égale à 100 µm.

Suivant une forme de réalisation de l'invention, le mélange comprend en outre, à titre de particules d'au moins une autre substance, des particules d'au moins une substance choisie parmi le groupe constitué de silice, vitreuse ou fondue, et de silice cristalline, telle que du quartz, de la tridymite et de la cristobalite, de l'alumine, de la zircone, de la magnésie, de la chaux, des composés alcalins, ainsi que de leurs mélanges ou composés mixtes. De préférence la taille des particules de silice est inférieure ou égale à 0,5 mm, en étant de préférence comprise entre 0,1 et 0,3 mm.

Comme verre siliceux, il faut entendre tout verre contenant du silicium. On peut citer, de préférence, des verres silico-sodo-calciques, des borosilicates, du groisil ou calcin, avantageusement obtenu à partir de verre non teinté, ainsi que des mélanges de ces matières. De préférence la taille des particules de verre siliceux est inférieure ou égale à 1 mm de façon à pouvoir assurer une fusion totale des particules. Avantageusement leur taille sera comprise entre 0,3 et 0,6 mm.

Un mélange suivant l'invention contient du ou dès verres siliceux comme partie majoritaire en poids du mélange sec. Par cette expression il faut entendre que la fraction pondérale du ou des verres siliceux est supérieure à cette de tout autre constituant du mélange.

Un tel mélange est parfaitement approprié pour un procédé de traitement du type soudure céramique bien connu et bien maitrisé, où l'apport de chaleur résulte principalement d'une oxydation exothermique des particules combustibles du mélange. En présence d'oxygène et à la température de fonctionnement du four, la combustion est spontanée et les particules de verre siliceux fondent totalement en formant une masse amorphe capable d'être étendue en couche mince sur la paroi réfractaire à le mélange comprend en outre, à titre de substance, des particules d'au moins une substance réparer ainsi que de s'infiltrer dans les fissures formées dans cette paroi. La couche déposée est mince et elle présente un aspect lisse peu favorable à l'accrochage de dépôts de carbone. Sa rugosité en Ra est de l'ordre de 50 - 100 µm. Le calcul de cette rugosité répond aux normes ISO 11652 et ISO 487-1997. Cette valeur Ra est l'écart moyen arithméthique du profil de la surface, c'est-à-dire la moyenne arithmétique des valeurs absolues des écarts du profil (soit en crête ou en creux) dans les limites d'une longueur de base L.

La masse cohérente appliquée sur la paroi réfractaire à traiter constitue soit un traitement de surface pour lisser une paroi réfractaire rugueuse, par exemple en bouche d'enfournement de charbon dans une cokerie, soit un moyen pour combler de fines fissures sans surépaisseur pour la paroi réfractaire endommagée.

La réfractarité ou la température de début d'affaissement de la masse amorphe obtenue peut devoir avantageusement être adaptée à la température de service par la proportion de silice ajoutée par rapport à cette du verre siliceux broyé.

On peut, par ajustement du rapport pondéral entre les particules de verre siliceux et les particules de silice, obtenir un dépôt de couches extrêmement minces, d'une épaisseur par passage de la machine de projection inférieure à 2 mm. Ces couches présentent une surface extrêmement lisse, peu favorable à un accrochage de dépôt de carbone pendant le fonctionnement du four traité. Avantageusement, ce rapport pondéral peut être compris entre 3/1 et 6/1.

Suivant une forme perfectionnée de réalisation de l'invention, le mélange contient
a) 45 à 60% en poids de particules de verre siliceux,
b) 10 à 40 %, en particulier 20 à 30 %, en poids de particules combustibles,
c) 2 à 40 %, en particulier 5 à 10 %, en poids de particules de perlite expansée,
d) 10 à 25 % en poids de particules de silice,
   la somme des pourcentages en poids des constituants a) à d) donnant 100 % en poids.

L'invention concerne également un procédé-de traitement de substrat réfractaire de type procédé de soudure céramique. Il comprend une projection sur ce substrat d'un jet de mélange sec suivant l'invention en présence d'oxygène et à une température à raquette lesdites particules combustible donnent lieu avec ledit oxygène à une réaction exothermique, et une fusion au moins partielle des particules du mélange sous la forme d'une masse amorphe cohérente qui adhère et/ou interagit avec le substrat. En faisant usage par exemple de verre siliceux comme partie majoritaire en poids du mélange on peut même atteindre avantageusement une fusion complète des particules. Avantageusement le procédé comprend un déplacement du jet de mélange sec pendant la projection avec formation d'un dépôt en couche mince uniforme sur le substrat. On peut notamment prévoir un passage successif à plusieurs reprises à un même endroit du substrat de façon à obtenir une superposition de couches minces et lisses, l'une sur l'autre.

Suivant un mode perfectionné de réalisation de l'invention, le procédé comprend, après projection, un recuit de ladite masse adhérant au substrat à une température au moins supérieure à sa température de transition vitreuse. Cela permet à la masse amorphe déposée de parfaire sa densification et l'état lisse de sa surface.

De cette faculté de réaliser une masse fondue à la surface d'une paroi réfractaire découle un autre champ d'application de l'invention, à savoir un procédé de décapage et/ou d'usinage d'une paroi réfractaire. Le procédé suivant l'invention peut en effet être appliqué en four de verrerie pour décaper une paroi réfractaire en superstructure ou pour usiner des perforations dans des blocs en vue d'ancrer ultérieurement un produit qui sera déposé par soudure céramique. La masse cohérente formée interagit avec le substrat au point de le faire fondre et s'écouler, dans le but de modifier son profil ou de le creuser (perforation pour ancrage).

La présente invention va à présent être expliquée de manière encore plus détaillée à l'aide d'exemples donnés ci-dessous à titre non limitatif.

### Exemple 1

Le mélange à projeter est constitué de :
- 76 % de verre silico-sodo-calcique broyé (0,2-1 mm)
- 18 % de silicium broyé (<50 µm)
- 6 % d'aluminium fin (<63 µm)
   et son volume spécifique, après homogénéisation, est de 0,75 litre/kg.

La paroi réfractaire à traiter est à une température d'environ 900°C; l'allumage du mélange projeté dans le courant d'oxygène se fait spontanément et donne lieu à une réaction exothermique; un dépôt uniforme se forme lors d'un déplacement du jet de mélange pulvérulent (débit massique = 64,3 kg/heure).

La couche déposée a un aspect relativement lisse (rugosité en Ra = 50-100 µm) et résulte d'une fusion complète (pas de grains résiduels); elle a une épaisseur d'environ 3 mm par passage de jet de projection; elle adhère fortement à la paroi réfractaire, sans décollement, ni fissuration après refroidissement.

### Exemple 2

Le mélange est cette fois constitué de :
- 68 % de verre silico-sodo-calcique broyé (fraction 0,2-1mm);
- 19 % de silicium broyé (< 50µm.);
- 6 % d'aluminium fin (< 63 µm.);
- et 7 % de perlite expansée (fraction < 1 mm).

Grâce à l'addition de perlite expansée, le volume spécifique est nettement augmenté (1,8 litre/kg) par rapport à celui du mélange de l'exemple précédent.

Après projection dans les mêmes conditions, on a constaté un très bon étalement de la matière formée [surface plus lisse (rugosité en Ra=25µm) et épaisseur plus mince (2 mm)]. La masse volumique plus faible du mélange a permis de ralentir le débit du mélange (58 kg/heure) délivré par la machine de projection, ce qui a contribué à améliorer la qualité et la finesse du dépôt.

On a aussi constaté que la fraction constituée des particules oxydables (Si + Al) n'est plus sujette à une ségrégation (concentration vers le bas) lorsque le mélange est soumis à des secousses ou vibrations. Contrairement à ce qui passe avec le mélange sec de l'exemple précédent, dans lequel les particules combustibles n'adhérent pas à la surface des particules de verre siliceux, le mélange suivant l'exemple 2 ne montre plus cette tendance à la ségrégation.

### Exemple 3

Par rapport à l'exemple 2, une partie du verre siliceux broyé a été remplacée par un sable fin de silice afin d'augmenter la réfractarité de la masse obtenue.

Le mélange est donc constitué de :
- 55 % de verre silico-sodo-calcique broyé (0,2-1 mm);
- 10 % de sable de silice (quartz) (0,1-0,3mm);
- 20 % de silicium (< 50 µm);
- 8 % d'aluminium (< 63 µm);
- 7 % de perlite expansée (fraction < 1 mm);
   et son volume spécifique est de 1,6 litre/kg.

Ici, comme dans l'exemple 2, le débit massique a pu être ralenti (56 kg/heure), ce qui a conduit à un dépôt plus mince et à une surface encore plus uniforme épaisseur par passage = 1,5 mm; rugosité en Ra = 20 µm).

Le dépôt ainsi obtenu a été soumis à une recuisson à 1250°C durant 5h, ce qui a permis de parfaire sa densification; il a gardé son aspect vitreux et ne présente pas de tendance au fluage jusqu'à cette température; il adhère toujours parfaitement au support réfractaire même après refroidissement.

Enfin, il a été également constaté que, lors de la projection, à masse générée pénètre profondément à l'état fondu dans les fines fissures, ce qui facilite leur comblement sans former de surépaisseur à la surface du réfractaire endommagé.

Il doit être entendu que la présente invention n'est en aucune façon limitée aux formes et modes de réalisation décrits ci-dessous et que biens des modifications peuvent y être apportées sans sortir du cadre des revendications annexées.

## Revendications

1. Mélange sec de traitement de substrat réfractaire comprenant
- des particules combustibles d'au moins une substance oxydable qui, en présence d'oxygène, donne lieu à une réaction exothermique, et
- des particules d'au moins une autre substance,
ces particules formant ensemble, au cours de ladite réaction exothermique, une masse cohérent capable d'adhérer et/ou d'interagir avec le substrat traité,
ce mélange comprenant, commue particules d'au moins une autre substance, des particules d'au moins une substance d'expansion, le mélange sec, sans les particules de cette au moins une substance d'expansion présentant une première densité apparente est le mélange sec contenant ladite au moins une substance d'expansion présentant une seconde densité apparente inférieure à ladite première densité apparente,
**caractérisé en ce que** ledit mélange comprend en outre, à titre de particules d'au moins une autre substance, des particules d'au moins un verre siliceux, comme partie majoritaire en poids du mélange.

2. Mélange suivant la revendication 1, **caractérisé en ce que** ladite au moins une substance d'expansion est constituée de grains d'une densité inférieure à 2.

3. Mélange suivant l'une des revendications 1 et 2, **caractérisé en ce que** ladite au moins une substance d'expansion est choisie parmi de la perlite expansée, de la vermiculite expansée, de la poudre de bois ou de coke, et leurs mélanges.

4. Mélange suivant l'une quelconque des revendications 1 à 3, **caractérisé en ce qu'**il comprend en outre, à titre de particules d'au moins une autre substance, des praticules d'au moins une substance choisie parmi de la silice, de l'alumine, de la zircone, de la magnésie, de la chaux, des composés alcalins et leurs mélanges ou composés mixtes.

5. Mélange suivant la revendication 4, **caractérisé en ce que** la silice est choisie parmi de la silice vitreuse ou fondue et de la silice cristalline et leurs mélanges.

6. Mélange suivant l'une des revendications 1 à 5, **caractérisé en ce que** le verre siliceux est choisi parmi le groupe constitué des verres silico-sodo-calciques, des borosilicates, du groisil ou calcin et de leurs mélanges

7. Mélange suivant l'une quelconque des revendications 4 à 6, **caractérisé en ce qu'**il présente un rapport pondéral entre les particules de verre siliceux et les particules de silice compris entre 3/1 et 6/1.

8. Mélange suivant l'une quelconque des revendications 1 à 7, **caractérisé en ce que** ladite au moins une substance oxydable est choisie parmi le groupe constitué de Si, Al, Zr, Mg, Ca, Fe, Cr, Ti ou de leurs combinaisons ou alliages.

9. Mélange suivant l'une quelconque des revendications 1 à 8, **caractérisé en ce qu'**il contient
a) 45 à 60% en poids de particules de verre siliceux,
b) 10 à 40% en poids de particules combustibles,
c) 5 à 10% en poids de particules de perlite expansée,
d) 10 à 25% en poids de particules de sillice,
la somme des pourcentages en poids de a) à d) donnant 100 % en poids.

10. Mélange suivant la revendications 9, **caractérisé en ce qu'**il contient
a) 45 à 60 % en poids de particules de verre siliceux,
b) 20 à 30 % en poids de particules combustibles,
c) 5 à 10 % en poids de particules de perlite expansée,
d) 10 à 25 % en poids de particules de silice,
la somme des pourcentages en poids de a) à d) donnant 100 % en poids.

11. Mélange suivant l'une quelconque des revendications 1 à 10, **caractérisé en ce que** la taille maximale des particules de substance d'expansion est inférieure ou égale à 1 mm.

12. Mélange suivant l'une quelconque des revendications 1 à 11, **caractérisé en ce que** la taille maximale des particules combustibles est inférieure ou égale à 100 µm.

13. Mélange suivant l'une quelconque des revendications 4 à 12, **caractérisé en ce que** la taille maximale des particules de silice est inférieure ou égale à 0,5 mm.

14. Mélange suivant l'une quelconque des revendications 1 à 13, **caractérisé en ce que** la taille maximale des particules de verre siliceux est inférieure ou égale à 1 mm.

15. Procédé de traitement de substrat réfractaire, comprenant une projection sur ce substrat d'un jet du mélange sec suivant l'une quelconque des revendications 1 à 14, en présente d'oxygène et à une température à laquelle lesdites particules combustibles donnent lieu avec ledit oxygène à une réaction exothermique, et une fusion au moins partielle dès particules du mélange sous la forme d'une masse cohérente qui adhère et/ou interagit avec le substrat.

16. Procédé suivant la revendication 15, **caractérisé en ce qu'**il comprend un déplacement du jet de mélange sec pendant la projection avec formation d'un dépôt en couche mince uniforme sur le substrat.

17. Procécé suivant l'une des revendications 15 et 16, **caractérisé en ce qu'**il comprend, après projection, un recuit de ladite masse adhérant au substrat à une température au moins supérieure à sa température de transition vitreuse.

18. Procédé suivant la revendication 15, **caractérisé en ce qu'**il comprend en outre, par interaction de la masse cohérente formée avec le substrat réfractaire, une fusion et un écoulement de celui-ci, avec modification de profil ou creusement de ce substrat.

## Claims

1. Dry mix for treating refractory substrates, comprising
- combustible particles of at least one oxidisable substance which, in the presence of oxygen, gives rise to an exothermic reaction, and
- particles of at least one other substance,
wherein these particles together form, during said exothermic reaction, a coherent mass capable of adhering to and/or interacting with the treated substrate,
this mix comprising, as particles of at least one other substance, particles of at least one expanding substance, the dry mix without the particles of this at least one expanding substance having a first bulk density and the dry mix comprising said at least one expanding substance having a second bulk density lower than said first bulk density,
**characterised in that** said mix also comprises, as particles of at least one other substance, particles of at least one silica glass, as the majority part by weight of the mix.

2. Mix according to claim 1, **characterised in that** said at least one expanding substance consists of grains of a density of less than 2.

3. Mix according to one of claims 1 and 2, **characterised in that** said expanding substance is selected from expanded perlite, expanded vermiculite, powdered wood or coke, and their mixtures.

4. Mix according to any of claims 1 to 3, **characterised in that** it also comprises, as particles of the at least one other substance, particles of at least one substance selected from silica, alumina, zircona, magnesia, lime, alkaline compounds and their mixtures or mixed compounds.

5. Mix according to claim 4, **characterised in that** the silica is selected from vitreous or fused silica, and crystalline silica and their m ixtu res.

6. Mix according to one of claims 1 to 5, **characterised in that** the silica glass is selected from the group comprising silico-sodo-calcic glasses, borosilicates, cullet or broken glass, and their mixtures.

7. Mix according to any of claims 4 to 6, characaterised in that it has a weight ratio between the particles of silica glass and the particles of silica of between 3/1 and 6/1.

8. Mix according to any of claims 1 to 7, **characterised in that** said at least one oxidisable substance is selected from the group comprising Si, Al, Zr, Mg, Ca, Fe, Cr, Ti or their combinations or alloys.

9. Mix according to any of claims 1 to 8, **characterised in that** it contains:
a) 45 to 60% by weight of silica glass particles,
b) 10 to 40% by weight of combustible particles,
c) 2 to 40% by weight of expanded perlite particles,
d) 10 to 25% by weight of silica particles,
the sum of the percentages by weight of constituents a) to d) giving 100% by weight.

10. Mix according to claim 9, **characterised in that** it contains:
a) 45 to 60% by weight of silica glass particles,
b) 20 to 30% by weight of combustible particles,
c) 5 to 10% by weight of expanded perlite particles,
d) 10 to 25% by weight of silica particles,
the sum of the percentages by weight of constituents a) to d) giving 100% by weight.

11. Mix according to any of claims 1 to 10, **characterised in that** the maximum size of the particles of expanding substance is less than or equal to 1 mm.

12. Mix according to any of claims 1 to 11, **characterised in that** the maximum size of the combustible particles is less than or equal to 100 µm.

13. Mix according to any of claims 4 to 12, **characterised in that** the maximum size of the silica particles is less than or equal to 0.5 mm.

14. Mix according to any of claims 1 to 13, **characterised in that** the maximum size of the silica glass particles is less than or equal to 1 mm.

15. Process for treatment of refractory substance, comprising projection onto this substrate of a jet of dry mix according to any of claims 1 to 14 in the presence of oxygen and at a temperature at which said combustible particles give rise to an exothermic reaction with said oxygen, and an at least partial fusion of particles of the mix in the form of a coherent mass which adheres to and/or interacts with the substrate.

16. Process according to claim 15, **characterised in that** it comprises movement of the jet of dry mix during projection, forming a deposit of a uniform thin layer on the substrate.

17. Process according to one of claims 15 and 16, **characterised in that** it comprises, after projection, annealing of said mass adhering to the substrate at a temperature at least greater than its vitreous transition temperature.

18. Process according to claim 15, **characterised in that** it comprises also, by interaction of the coherent mass formed with the refractory substrate, a fusion and flow thereof with modification of the profile or hollowing of this substrate.

## Patentansprüche

1. Trockenmischung zur Behandlung eines feuerfesten Substrats, umfassend
- brennbare Partikel mindestens einer oxidierbaren Substanz die, in Gegenwart von Sauerstoff, zu einer exothermen Reaktion führt, und
- Partikel mindestens einer weiteren Substanz,
wobei diese Partikel, im Laufe der exothermen Reaktion, gemeinsam eine zusammenhängende Masse bilden, die dazu befähigt ist, am behandelten Substrat anzuhaften und/oder mit diesem in Wechselwirkung zu treten,
wobei diese Mischung, als Partikel mindestens einer weiteren Substanz, Partikel mindestens einer Expansionssubstanz umfasst, wobei die Trockenmischung, ohne die Partikel dieser mindestens einen Expansionssubstanz, eine erste scheinbare Dichte aufweist und die Trockenmischung, welche die mindestens eine Expansionssubstanz enthält, eine zweite scheinbare Dichte aufweist, die geringer als die erste scheinbare Dichte ist,
**dadurch gekennzeichnet, dass** die Mischung darüber hinaus, als Partikel mindestens einer weiteren Substanz, Partikel mindestens eines Silikatglases als überwiegenden Gewichtsanteil der Mischung umfasst.

2. Mischung nach Anspruch 1, **dadurch gekennzeichnet, dass** die mindestens eine Expansionssubstanz aus Körnern mit einer Dichte von weniger als 2 besteht.

3. Mischung nach einem der Ansprüche nach einem der Ansprüche 1 und 2, **dadurch gekennzeichnet, dass** die mindestens eine Expansionssubstanz aus expandiertem Perlit, expandiertem Vermiculit, pulverförmigem Holz oder Koks und deren Mischungen ausgewählt ist.

4. Mischung nach einem beliebigen der Ansprüche 1 bis 3, **dadurch gekennzeichnet, dass** die darüber hinaus, als Partikel mindestens einer weiteren Substanz, Partikel mindestens einer Substanz umfasst, die aus Siliciumdioxid, Aluminiumoxid, Zirkoniumdioxid, Magnesia, Kalk, alkalischen Verbindungen und deren Mischungen oder Mischverbindungen ausgewählt ist.

5. Mischung nach Anspruch 4, **dadurch gekennzeichnet, dass** das Siliciumdioxid aus glasartigem oder geschmolzenem Siliciumdioxid und kristallinem Siliciumdioxid und deren Mischungen ausgewählt ist.

6. Mischung nach einem der Ansprüche 1 bis 5, **dadurch gekennzeichnet, dass** das Silikatglas aus der Gruppe ausgewählt ist, die aus den Kalk-Natron-Silikatgläsern, den Borosilikaten, Glasbruch oder Altglas und deren Mischungen besteht.

7. Mischung nach einem beliebigen der Ansprüche 4 bis 6, **dadurch gekennzeichnet, dass** sie ein Gewichtsverhältnis zwischen den Silikatglasparükeln und den Siliciumdioxidpartikeln aufweist, das im Bereich von 3/1 bis 6/1 liegt.

8. Mischung nach einem beliebigen der Ansprüche 1 bis 7, **dadurch gekennzeichnet, dass** die mindestens eine oxidierbare Substanz aus der Gruppe ausgewählt ist, die aus Si, Al, Zr, Mg, Ca, Fe, Cr, Ti oder deren Kombinationen oder Legierungen besteht.

9. Mischung nach einem beliebigen der Ansprüche 1 bis 8, **dadurch gekennzeichnet, dass** die Folgendes enthält
a) 45 bis 60 Gewichts% an Silikatglaspartikeln,
b) 10 bis 40 Gewichts% an brennbaren Partikeln,
c) 5 bis 10 Gewichts% an Partikeln aus expandiertem Perlit,
d) 10 bis 25 Gewichts% an Siliciumdioxidpartikeln,
wobei die Summe der Prozentwerte von a) bis d) 100 Gewichts% ergibt.

10. Mischung nach Anspruch 9, **dadurch gekennzeichnet, dass** sie Folgendes enthält
a) 45 bis 60 Gewichts% an Silikatglaspartikeln,
b) 20 bis 30 Gewichts% an brennbaren Partikeln,
c) 5 bis 10 Gewichts% an Partikeln aus expandiertem Perlit,
d) 10 bis 25 Gewichts% an Siliciumdioxidpartikeln,
wobei die Summe der Prozentwerte von a) bis d) 100 Gewichts% ergibt.

11. Mischung nach einem beliebigen der Ansprüche 1 bis 10, **dadurch gekennzeichnet, dass** die maximale Größe der Expansionssubstanzpartikel kleiner oder gleich 1 mm ist.

12. Mischung nach einem beliebigen der Ansprüche 1 bis 11, **dadurch gekennzeichnet, dass** die maximale Größe der brennbaren Partikel kleiner oder gleich 100 µm ist.

13. Mischung nach einem beliebigen der Ansprüche 4 bis 12, **dadurch gekennzeichnet, dass** die maximale Größe der Siliciumdioxidpartikel kleiner oder gleich 0,5 mm ist.

14. Mischung nach einem beliebigen der Ansprüche 1 bis 13, **dadurch gekennzeichnet, dass** die maximale Größe der Silikatglaspartikel kleiner oder gleich 1 mm ist.

15. Verfahren zur Behandlung eines feuerfesten Substrats, umfassend das Besprühen dieses Substrats mit einem Strahl der Trockenmischung nach einem beliebigen der Ansprüche 1 bis 14, in Gegenwart von Sauerstoff und bei einer Temperatur, bei welcher die brennbaren Partikel zu einer exothermen Reaktion mit dem Sauerstoff und zu einem mindestens teilweisen Schmelzen der Partikel der Mischung führen, welche die Form einer zusammenhängenden Masse annimmt, die am Substrat anhaftet und/oder mit diesem in Wechselwirkung tritt.

16. Verfahren nach Anspruch 15, **dadurch gekennzeichnet, dass** es eine Bewegung des Trockenmischungsstrahls während des Versprühens umfasst, mit Bildung einer gleichförmigen Ablagerung als Dünnschicht auf dem Substrat.

17. Verfahren nach einem der Ansprüche 15 und 16, **dadurch gekennzeichnet, dass** es, nach dem Versprühen, ein Glühen der Masse, welche am Substrat anhaftet, bei einer Temperatur umfasst, die mindestens oberhalb von deren Glasübergangstemperatur liegt.

18. Verfahren nach Anspruch 15, **dadurch gekennzeichnet, dass** es darüber hinaus, durch eine Wechselwirkung der gebildeten zusammenhängenden Masse mit dem feuerfesten Substrat, ein Schmelzen und eine Fließbewegung desselben umfasst, mit Profiländerung oder Aushöhlung dieses Substrats.
